# EUROPÄISCHE PATENTSCHRIFT

(11) **EP 0 382 082 B1**
(45) Veröffentlichungstag und Bekanntmachung des Hinweises auf die Patenterteilung: **16.06.1993**
(21) Anmeldenummer: 90101965.3
(22) Anmeldetag: 01.02.1990
(51) Int. Cl.: B60T 8/18

(54) **Vorrichtung zur lastabhängigen Regelung des Bremsdruckes an den blattgefederten Achsen eines Doppelachsaggregates eines Fahrzeuges**
Device for load dependant control of brake pressure of tandem axle bogie with leaf springs for vehicles
Dispositif pour le réglage de la pression de freinage en fonction de la charge sur les essieux suspendus par lames d'un ensemble d'essieux en tandem d'un véhicule

(30) Priorität: 06.02.1989 DE 3903449
(43) Veröffentlichungstag der Anmeldung: 16.08.1990
(73) Patentinhaber: Iveco Magirus Aktiengesellschaft, D-89017 Ulm (DE)
(72) Erfinder: Egetö, Bela, Dipl.-Ing. (FH), D-7959 Achstetten-Stetten (DE)
(74) Vertreter: TER MEER STEINMEISTER & PARTNER GbR

(56) Entgegenhaltungen:
- DE-A- 3 151 431
- DE-A- 3 723 493
- DE-B- 1 183 814
- DE-B- 1 655 698

## Beschreibung

Die Erfindung betrifft eine Vorrichtung zur lastabhängigen Regelung des Bremsdruckes an den blattgefederten Achsen eines Doppelachsaggregates eines Fahrzeugs mittels eines rahmenfesten Regelventils, das über eine an beiden Achsen angelenkte Geberstange eines Gebergestänges und eine daran . angelenkte Steuerstange steuerbar ist, wobei durch lastabhängiges Ein- und Ausfedern des Doppelachsaggregates die Abstandsänderung zwischen Rahmen und Achsen als Steuerweg für das Regelventil verwendet ist.

Eine Bremsdruckregelvorrichtung der vorgenannten Art ist aus der DE- A- 33 22 702 bekannt. Hierbei ist die an der Geberstange angelenkte Steuerstange über ein Übersetzungsgestänge mit dem Reglerhebel des Reglerventils verbunden. Zwar eignet sich die bekannte Regelvorrichtung zum Einsteuern eines im wesentlichen konstanten Bremsdruckes bei stationären Achsen wie auch bei instationären einer Pendelbewegung ausgesetzten Achsen; weist jedoch das Doppelachsaggregat eine liftbare Nachlaufachse auf, so kann die Vorrichtung nicht eingesetzt werden.

Aufgabe der Erfindung ist die Schaffung einer Regelvorrichtung der eingangs genannten Art, die einfach aufgebaut ist und für alle Betriebsfälle gleiche Abbremsverhältnisse bei gleicher Achslast zuverlässig ermöglicht, unabhängig davon, ob eine liftbare (Nachlauf-)Achse des Doppelachsaggregates geliftet oder ungeliftet ist.

Gelöst wird die der Erfindung zugrundeliegende Aufgabe durch die im kennzeichnenden Teil des Anspruchs 1 angegebenen Mittel.

Vorteilhaft weitergebildet wird der Erfindungsgegenstand durch die Merkmale der Unteransprüche 2 bis 5.

Wesen der Erfindung ist, daß der Anlenkpunkt der Steuerstange am Reglerhebel des Regelventils bei einer Höhenverstellung der liftbaren Achse des Doppelachsaggregats an einer ortsfesten Stelle verbleibt, so daß kein Steuerdruck in das Regelventil durch die Höhenverstellung der zweiten Achse eingespeist und mithin der Bremsdruck nicht durch die vorgenannte unterschiedliche Betriebsart der Achsen verfälscht wird.

Bei ungelifteter Nachlaufachse ist die Funktion grundsätzlich gleich mit der bekannten Regelvorrichtung gemäß DE-OS 33 22 702.

Wird die Nachlaufachse geliftet, ändert sich bei gleicher Achslast die Lage des Anlenkpunktes der Steuerstange an der Geberstange. Dadurch würde nach der bekannten Vorrichtung eine unerwünschte Regelung am Bremskraftregler auftreten.

Um dieses zu vermeiden, wird erfindungsgemäß über ein Hebelsystem der vorgenannte Anlenkpunkt bei einem Liften in eine neue Position gebracht, ohne daß sich die Lage des Reglerhebels verändert. Dadurch ist die Möglichkeit gegeben, daß sich bei gleichbleibender Achslast der geregelte Bremsdruck nicht verändert, unabhängig davon, ob die Nachlaufachse geliftet oder ungeliftet ist. Es ergibt sich vorteilhafterweise ein einfacher mechanischer Aufbau einer Regelvorrichtung mit wenigen Einzelteilen. Die Regelvorrichtung ist zuverlässig und im wesentlichen wartungsfrei. Es sind bei einem Doppelachsaggregat sowohl symmetrische als auch asymmetrische Blattfedern einsetzbar.

Zwar ist neben der eingangs genannten DE-A-33 22 702 auch aus DE-A-37 23 493 eine Bremsdruckregelvorrichtung der gattungsgemäßen Art bekannt, welche die erfindungsgemäße Aufgabe im wesentlichen löst. Bekannterweise sind jedoch zusätzliche anders geartete Konstruktionsmittel gegeben, nämlich (u.a.) eine rahmenfeste Wippe für die liftbare Nachlaufachse, die über eine Schwinge an der Blattfeder der Antriebsachse angelenkt ist.

Die Erfindung wird nachfolgend anhand eines Ausführungsbeispiels unter Bezugnahme auf die beigefügte schematische Zeichnung näher erläutert; es zeigen:
- Fig. 1: einen schematischen vertikalen Längsschnitt eines blattgefederten Doppelachsaggregats mit einer Regelvorrichtung bei einer Fahrt mit ungelifteter sowie mit einer gelifteten Nachlaufachse sowie bei einer Fahrt mit einem pendelnden Doppelachsaggregat, und
- Fig. 2: die Regelvorrichtung nach Fig. 1 in einer Prinzipskizze hinsichtlich der erstgenannten beiden Betriebszustände einer gelifteten und einer ungelifteten Nachlaufachse.

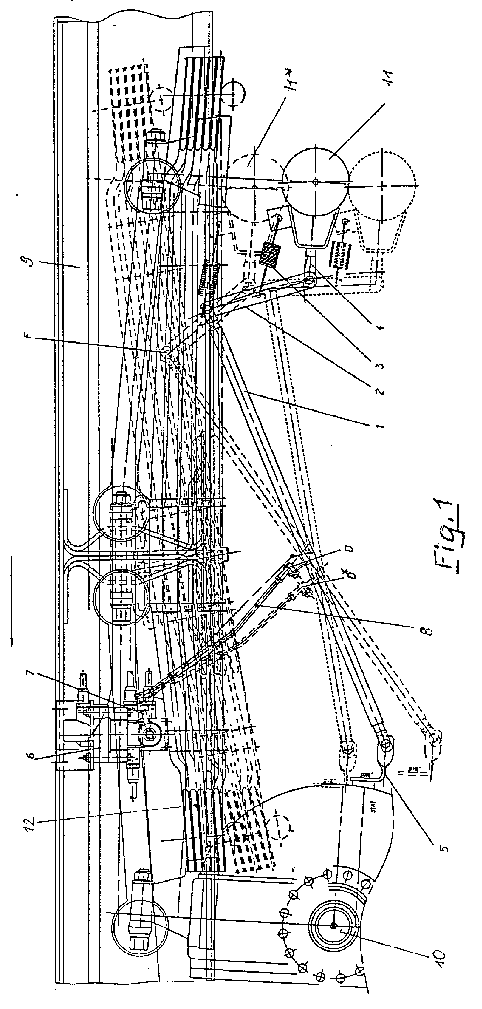

Ein in Fig. 1 nicht näher dargestelltes Nutzfahrzeug umfaßt ein Doppelachsaggregat bestehend aus einer Antriebsachse (10) und einer liftbaren Nachlaufachse (11), die über Blattfedern (12) am Fahrzeugrahmen (9) federnd aufgehängt sind.

Die Antriebsachse (10) umfaßt ein lager (5), an welchem eine Geberstange (1) angelenkt ist, deren anderes Ende mit einem Verbindungshebel (2) gelenkig verbunden ist, der seinerseits mit seinem anderen Ende über ein Lager (4) mit der liftbaren Nachlaufachse (11) verbunden ist.

Der Verbindungshebel (2) ist durch eine Feder (3) in Richtung Nachlaufachse (11) federvorgespannt. Der Verbindungshebel (2) ist vorgesehen, um bei unterschiedlichen Betriebszuständen einer pendelnden, stationären oder gelifteten Nachlaufachse den unterschiedlichen Abstand zwischen den Lagern (4, 5) auszugleichen.

An der Geberstange (1) ist eine Steuerstange (8) am Anlenkpunkt (D, D*) angelenkt, die gemäß Ausführungsbeispiel nach Fig. 1 geringfügig abgewinkelt ist und am oberen Ende am Anlenkpunkt (E) mit dem Reglerhebel (7) verbunden ist. Der Reglerhebel (7) verläuft hierbei im wesentlichen senkrecht zur Steuerstange (8) in einer Vertikalebene des gesamten Gebergestänges der Regelvorrichtung und führt letztlich zum Regelventil (6) bzw. dem Bremskraftregler, der ortsfest am Fahrzeugrahmen (9) des Fahrzeugs befestigt ist.

In Fig. 1 ist in ausgezogener Linie der stationäre Zustand der beiden Achsen (10, 11) des Doppelachsaggregats gezeigt, in gepunkteter Linie der gependelte Zustand des Doppelachsaggregats und in strichlierter Linie der geliftete Zustand der Nachlaufachse (11). Ersichtlich erfährt die Geberstange (1) eine Drehung im Gegenuhrzeigersinn, wenn die Nachlaufachse (11) geliftet wird. Im gelifteten Zustand der Nachlaufachse kann der Anlenkpunkt (F) der Geberstange (1) am Verbindungshebel (2) als konstant angesehen werden, wenn die Antriebsachse (10) im Betrieb ein- und ausfedert. Ersichtlich erfährt beim Liften der Nachlaufachse auch die Blattfeder (12) eine Verdrehung im Gegenuhrzeigersinn gemäß Ausführungsbeispiel der Fig. 1.

Es wird also beim Liften der Nachlaufachse (11) die Antriebsachse (10*) des Doppelachsaggregates nach unten verschoben. Der Abstand zwischen den Lagerungen (4 und 5) wird größer. Die Längenveränderung wird durch den Verbindungshebel (2) und die Feder (3) ausgeglichen.

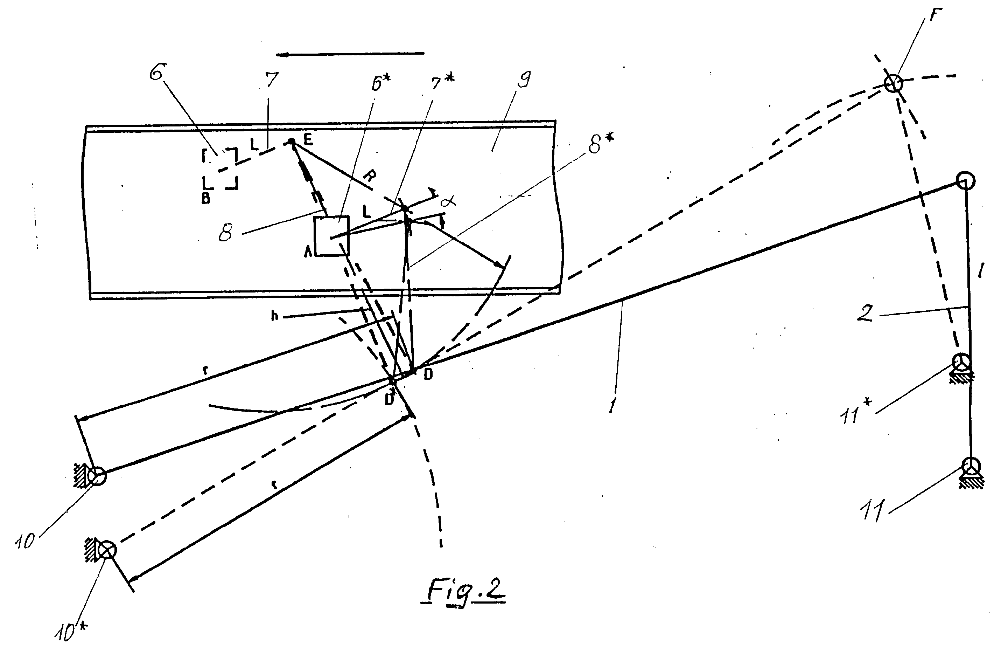

Vorgenannte Konstruktion ist schematisch in Fig. 2 dargestellt. Hierbei ist in ausgezogener Linie der Bremskraftregler bzw. das Regelventil (6) an einer beliebigen (nicht erfindungsgemäßen) Stelle am Fahrzeugrahmen (9) befestigt. Beim Liften der Nachlaufachse (11*) verdreht sich die Geberstange (1) einschließlich Verbindungshebel (2) mit der Länge (1) aus der Stellung gemäß ausgezogener Linie in die strichlierte Stellung. Hierbei erfährt der Anlenkpunkt (D) eine Bewegung in die Anlenkstellung (D*). Die Ortsveränderung des Anlenkpunktes (D, D*) bewirkt eine Verstellung des Reglerhebels (7*) mit der Länge (L) um einen Winkel (α). Wird bei einem Liftvorgang der Reglerhebel (7) um den Winkel (α) nach unten bewegt, ergibt dies (nach dem Stand der Technik) eine unerwünschte Druckänderung am Regelventil (6*).

Um vorgenannten Nachteil zu vermeiden, wird das Bremsregelventil (6) am Fahrzeugrahmen (9) an einer bestimmten Stelle befestigt, wobei bei einem Liftvorgang der Nachlaufachse der Anlenkpunkt (E) des Reglerhebels (7) an der Steuerstange (8) ortsfest verbleibt, d.h. der Reglerhebel (7) keine Winkelveränderung (α) erfährt: erfindungsgemäß liegt der Anlenkpunkt (E) auf dem geometrischen Ort der Mittelsenkrechten (h) zwischen D̅ D̅*̅ . Längs der Mittelsenkrechten (h) wird nun im praktischen Ausführungsbeispiel ein geeigneter Anlenkpunkt (E) ausgewählt, so daß der Winkel zum Reglerhebel (7) in etwa 90° beträgt. Entsprechend wird das Regelventil (6) am Fahrzeugrahmen (9) montiert. Somit wird gewährleistet, daß sich beim Liften der Nachlaufachse (11*) die Lage des Reglerhebels (7) nicht verändert und keine unerwünschte Bremsdruckregelung erfolgt.

Bei Fahrt durch unebenes Gelände erfährt das Doppelachsaggregat eine Pendelbewegung. Auch hier muß der Bremsdruck unverändert bleibern. Das kann erreicht werden durch empirische oder konstruktive Abstimmung der Länge (r) (Abstand zwischen Lager (5) und Anlenkpunkt (D)) und der Länge (1) des Verbindungshebels (2).

## Patentansprüche

1. Vorrichtung zur lastabhängigen Regelung des Bremsdruckes an den blattgefederten Achsen (10, 11) eines Doppelachsaggregates eines Fahrzeugs mittels eines rahmenfesten Regelventils (6), das über eine an beiden Achsen angelenkte Geberstange (1) eines Gebergestänges und eine daran im Punkt (D, D*) angelenkte Steuerstange (8) steuerbar ist, wobei durch lastabhängiges Ein- und Ausfedern des Doppelachsaggregates die Abstandsänderung zwischen Rahmen (9) und Achsen (10, 11) als Steuerweg für das Regelventil (6) verwendet ist,
dadurch gekennzeichnet,
daß der Anlenkpunkt (E) der Steuerstange (8) am Reglerhebel (7) auf der Mittelsenkrechten (h) und in der Ebene der gelifteten und ungelifteten Achse der Steuerstange gelegen ist, wobei die Mittelsenkrechte (h) durch den eine unterschiedliche Lage einnehmenden Anlenkpunkt (D*, D) der Steuerstange (8) an der Geberstange (1) festgelegt ist, nämlich zum einen bei gelifteter Achse (11*) und zum anderen bei ungelifteter Achse (11) des stationären, d.h. nichtpendelnden Doppelachsaggregates.

2. Vorrichtung nach Anspruch 1,
dadurch gekennzeichnet,
daß der das Regelventil (6) steuernde Reglerhebel (7) im wesentlichen senkrecht zur Mittelsenkrechten (h) im Bereich des Fahrzeugrahmens (9) angeordnet ist.

3. Vorrichtung nach Anspruch 1 oder 2,
dadurch gekennzeichnet,
daß die Steuerstange (8) leicht abgewinkelt ist (Fig.1).

4. Vorrichtung nach einem der Ansprüche 1 bis 3,
dadurch gekennzeichnet,
daß die Geberstange (1) über eine Lagerung (5) an der Antriebsachse (10) gelagert und an ihrem anderen Ende an einem Verbindungshebel (2) angelenkt ist, dessen anderes Ende über eine zweite Lagerung (4) mit der liftbaren Achse (11) des Doppelachsaggregates verbunden ist.

5. Vorrichtung nach Anspruch 4,
dadurch gekennzeichnet,
daß der Verbindungshebel (2) in Richtung liftbarer Achse durch eine Feder (3) federvorgespannt ist.

## Claims

1. A device to regulate, dependent on load, the brake pressure on the axles (10, 11 ), sprung with flat springs, of a twin-axle unit of a vehicle by means of a regulating valve (6), which is fixed to the chassis and which is controllable by mean of a transmitter rod (1) of a transmitter rod system, which transmitter rod (1) is pivotably connected to both axles, and by means of a control rod (8) pivotably connected thereto at a point (D, D*), in which through a load-dependent stroke into and out of the twin axle unit, the change in distance between the chassis (9) and axles (10, 11) is used as the control means for the regulating valve (6),
characterised in that
the pivot point (E) of the control rod (8) on the regulator lever (7) is situated in the plane of the lifted and unlifted axis of the control rod, and on the mid-perpendicular (h) which is defined between different positions assumed by the pivot point (D*, D) of the control rod (8) on the transmitter rod (1), namely on the one hand with the lifted axle (11*) and on the other hand with the non-lifted axle (11) of the stationary, i.e. non-oscillating, twin axle unit.

2. A device according to Claim 1,
characterised in that
the regulator lever (7) controlling the regulating valve (6) is arranged substantially perpendicularly to the mid-perpendicular (h) in the region of the chassis (9) of the vehicle.

3. A device according to Claim 1 or 2,
characterised in that
the control rod (8) is slightly angled (Fig. 1).

4. A device according to any one of Claims 1 to 3,
characterised in that
the transmitter rod (1) is mounted on the driving axle (10) via a bearing (5) and is pivoted at its other end on a connecting lever (2), the other end of which is connected via a second bearing (4) with the liftable axle (11) of the twin-axle unit.

5. A device according to Claim 4,
characterised in that
the connecting lever (2) is elastically pre-stressed in the direction of the liftable axle by means of a spring (3).

## Revendications

1. Dispositif pour la régulation en fonction de la charge de la pression de freinage sur les essieux (10, 11) suspendus sur des ressorts à lames, d'un ensemble d'essieux en tandem d'un véhicule, au moyen d'une vanne de réglage (6) fixée sur le châssis, et qui est susceptible d'être commandée par l'intermédiaire d'une tige de transmission (1), articulée sur les deux essieux, d'une tringlerie de transmission, et par l'intermédiaire d'une tige de commande (8) articulée sur cette tige de transmission aux points (D, D*), tandis que la modification de la distance entre le châssis (9) et les essieux (10, 11) provoquée par la compression et le relâchement en fonction de la charge des ressorts de l'ensemble d'essieux en tandem, est utilisée comme course de commande pour la vanne de réglage (6), dispositif caractérisé en ce que le point d'articulation (E) de la tige de commande (8) sur le levier régulateur (7) est placé sur la médiatrice (h) et dans le plan de l'axe relevé et de l'axe non relevé de la tige de commande, tandis que la médiatrice (h) est déterminée par le point d'articulation (D*, D) de la tige de commande (8) sur la tige de transmission (1), point d'articulation prenant une position différente, d'une part, pour l'essieu soulevé (11*) et, d'autre part, pour l'essieu non soulevé (11)de l'ensemble d'essieux en tandem stationnaires, c'est-à-dire non oscillants.

2. Dispositif selon la revendication 1, caractérisé en ce que le levier régulateur (7) commandant la vanne de réglage (6) est essentiellement perpendiculaire à la médiatrice (h) au voisinage du châssis (9) du véhicule.

3. Dispositif selon la revendication 1 ou la revendication 2, caractérisé en ce que la tige de commande (8) est légèrement coudée (figure 1).

4. Dispositif selon une des revendications 1 à 3, caractérisé en ce que la tige de transmission (1) est montée sur l'essieu d'entraînement (10) par l'intermédiaire d'un palier (5) et est articulée à son autre extrémité à un levier de liaison (2), dont l'autre extrémité est reliée par l'intermédiaire d'un second palier (4) à l'essieu susceptible d'être soulevé (11) de l'ensemble d'essieux en tandem.

5. Dispositif selon la revendication 4, caractérisé en ce que le levier de liaison (2) est précontraint élastiquement par un ressort (3) en direction de l'essieu susceptible d'être soulevé.
